# EUROPEAN PATENT APPLICATION

(11) **EP 1 369 346 A2**
(43) Date of publication of application: **10.12.2003**
(21) Application number: 03012587.6
(22) Date of filing: 03.06.2003
(51) Int. Cl.: B62K 21/26, B62J 27/00, B62J 11/00

(54) **An accessory gripping device for the passenger of a motorcycle**

(30) Priority: 04.06.2002 IT TO20020113 U
(71) Applicant: Casetta, Alberto, 10128 Torino (IT)
(72) Inventor: Casetta, Alberto, 10128 Torino (IT)
(74) Representative: Deambrogi, Edgardo

(57) **Abstract**

An accessory gripping device for the passenger of a motorcycle (10) is described and comprises a cover (22) which can be fitted on the motorcycle fuel tank (12) by adhesion and which has a pair of lateral handgrips (24) shaped for gripping by the passenger.

## Description

The present invention relates to an accessory device for motorcycles and in particular to a gripping device which a passenger can grip and/or lean on when the motorcycle is in motion.

In the motorcycling field and in particular for motorcycles of large cylinder capacity and high power which are arranged for transporting a passenger, there has always been a need to ensure greater comfort and safety for the passenger and for the driver when two people are travelling on the motor cycle.

The greatest problem in such situations is due to the fact that the passenger, who is seated in a rear and raised position on the saddle and in close contact with the driver, has limited freedom of movement, often with a poor view of the road in front of him, and lacks convenient grips for supporting himself and keeping himself balanced during travel, in contrast with the driver, who can easily spread out his hands on the handlebar in order to balance himself during manoeuvres.

This problem is noticed in particular during sudden accelerations, abrupt braking, and when leaning over on bends at sustained speed, in which situations the passenger has difficulty in imitating the driver in the appropriate movements.

To enable the passenger to hold himself firmly on the motorcycle during travel, there are known solutions which provide for the arrangement of a pair of rigid handles disposed on the sides of the frame beneath the saddle in a position slightly behind the passenger's sitting position.

It is also known to provide a type of strap which is arranged across the saddle in front of the passenger and which the passenger can grip with both hands.

In both cases, the location of the grip on the motorcycle is substantially in axial alignment with the passenger's body in an upright position and enables the passenger to balance himself in different travelling conditions only with extreme difficulty and with the risk of losing his grip.

None of these solutions offers safety and comfort during all of the above-mentioned manoeuvres. The ever more widespread habit amongst passengers is to wrap their arms around the driver, clinging to him and greatly limiting his manoeuvring capability. Eventually, this behaviour annoys, hampers and obstructs the driver, putting the stability of the vehicle in danger.

The object of the present invention is to offer a satisfactory solution to the problems described by providing a more functional gripping device for the passenger of a motorcycle. During travel, this device enables the passenger to maintain a balanced position somewhat similar to that adopted by the driver, but without inconveniencing the driver.

According to the present invention, this object is achieved by means of a gripping device having the characteristics specified in Claim 1.

Particular embodiments of the invention are defined in the dependent claims.

Further characteristics and advantages of the invention will be explained in greater detail in the following detailed description which is given by way of non-limiting example with reference to the appended drawings, in which:

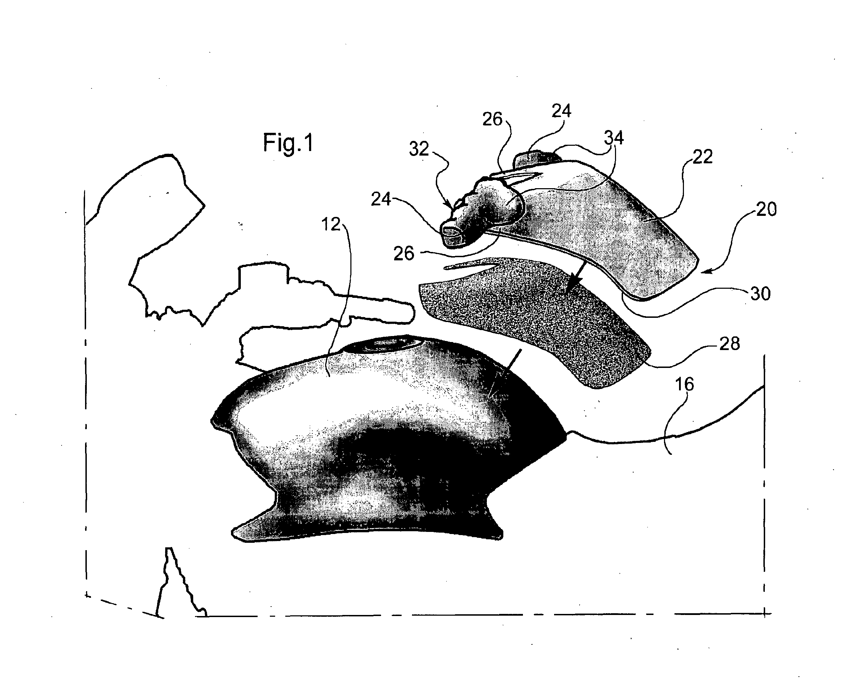

Figure 1 is an exploded view of the device according to the invention, shown during its fitting on a motorcycle fuel tank,

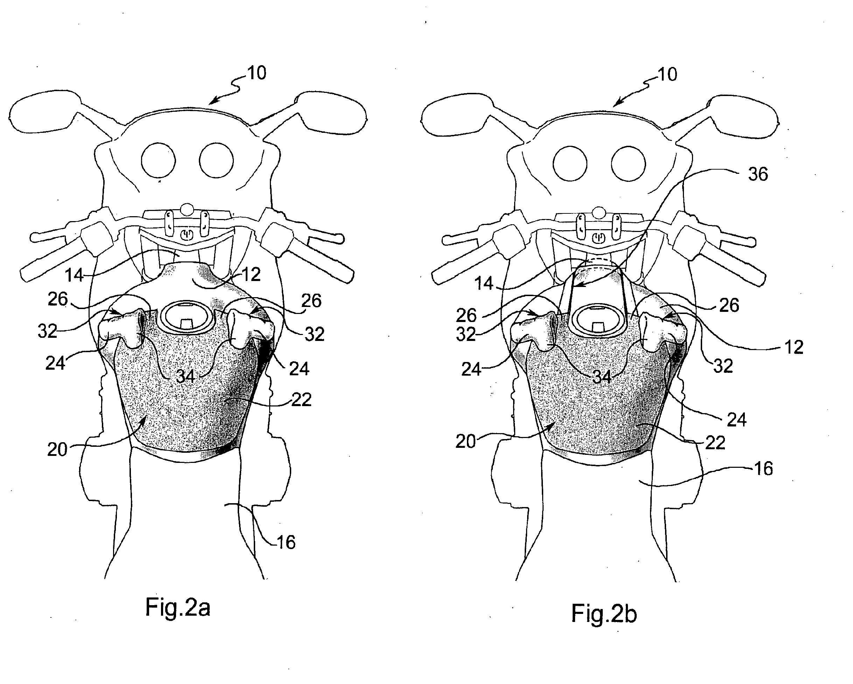

Figures 2a and 2b are two partial top views of a motorcycle provided with a first embodiment and with a second embodiment, respectively, of a device according to the invention,

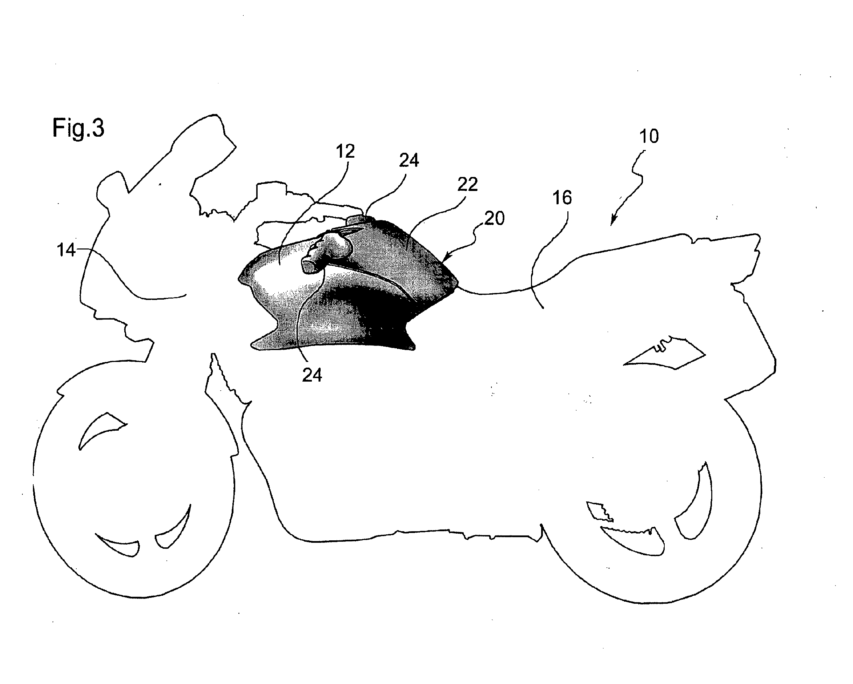

Figure 3 is a side view of a motorcycle provided with a device according to the invention, and

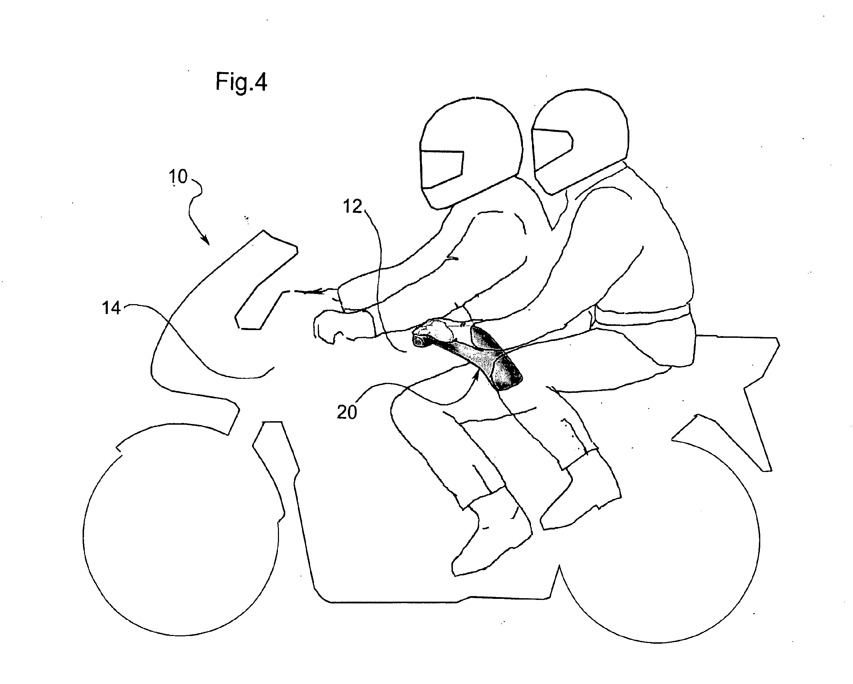

Figure 4 is a stylized view of a motorcycle provided with a device according to the invention, with a driver and a passenger in the travelling position.

With reference to the drawings, a motorcycle is generally indicated 10 and its fuel tank, indicated 12, is arranged conventionally on the frame in a forward position between the steering column 14 and the saddle 16.

A gripping device according to the invention is generally indicated 20. It comprises a shaped, generally convex, cover 22 which is provided, in its front portion, with a pair of lateral handgrips 24 suitable for constituting a grip for the passenger of the motorcycle.

The cover 22 can be fitted in position on a motor cycle by adhesion to the tank 12 on a rear portion of its surface facing towards the driver. The cover covers the surface of the tank only partially, following its rounded profile.

The cover may be made of rigid material pre-shaped in accordance with the profile of the tank for which it is intended, for example, by thermoforming of a thermoplastic material such as PVC or the like. Alternatively, the cover may be made of flexible material, preferably nylon or strong fabric such as Cordura or the like, in order to adapt to the profile of the tank when fitted.

In the embodiment shown in the drawings, the cover has towards its front portion - a shaped profile with a pair of extended appendages 26 which together define a free space which, in the fitted condition, affords access to the cap of the tank. Naturally, this shape is purely an example and may be varied freely according to the shape of the tank on which the device is intended to be fitted and/or to the stresses which it is to withstand, as will be explained further below.

In fact the cover 22 can advantageously be secured to the tank releasably by adhesive means.

According to a preferred embodiment, the cover can be fixed to the tank by means of a micro-hook quick connection device such as, for example, the device known by the trade name Velcro, comprising a first adhesive base layer 28 which can be fitted permanently on the tank and a second adhesive layer 30 which is fitted permanently, for example, by gluing or heat-sealing, on the internal surface of the cover, the second layer 30 having a shape which fits that of the first layer 28 and adhering thereto simply by pressure.

By virtue of the great adhesive strength of the micro-hook fixing device, the extent of the area of contact of the cover 22 with the tank 12 on which it is fitted, on which the strength of adhesion and the resistance to pulling depend, can be limited to a small area of the exposed surface of the tank whilst ensuring maximum security against detachment.

The gripping device according to the invention can, however, be removed by carefully lifting the cover from the base layer 28, starting from the edge portions or from predetermined attachment points.

It may also be possible to remove the base layer, if it is applied to the tank by gluing by means of epoxy adhesives, simply by bringing about its detachment by prolonged heating of the glue.

Preferably, the gripping device has an additional covering element which has a shape fitting that of the first adhesive base layer 28 and which adheres thereto simply by pressure, the additional covering element having a smooth outer surface reproducing the characteristic ornamental motifs of the tank 12 on which it is fitted. This additional element can be used to fit on the base layer in the absence of the cover 22 in order to protect the respective portion of the micro-hook fixing device.

The handgrips 24 are shaped in their front portions so as to form an undulating surface 32 for facilitating gripping with the fingers and have a large rear surface 34 for supporting the palm of the hand.

They are fixed firmly to the cover 22 by gluing or welding to its outer surface, or by means of a conventional mechanical fixing.

In an alternative embodiment, the device 20 comprises at least one safety fastening strap 36 which is connected to the appendages 26 of the cover and can be wrapped under the steering column of the motorcycle in order to give the device 20 greater resistance to pulling in the event of fast accelerations. In a further improved embodiment, the device 20 may also include a second safety fastening strap (not shown) which is connected to the cover in the region of its side portions and can be fixed to the central region of the motorcycle frame.

Advantageously, the device described represents a convenient and effective solution, allowing a motorcycle passenger to grip and/or lean on the device without in any way inconveniencing the driver who is engaged in driving, or limiting his freedom of movement. In particular, in contrast with the known solutions discussed in the introduction to this description, the device is designed to be produced as an accessory that can be fitted on a person's own motorcycle without too much difficulty.

In the preferred embodiment described, the device is arranged to withstand detachment by pulling in any travelling condition and in particular in the presence of fast accelerations imparted to the motorcycle and consequent stress exerted by the passenger gripping the device. However, the device can be removed when its use is not required, for example, when the driver does not need to transport a passenger and wishes to re-establish the original appearance of his vehicle.

Naturally, the principle of the invention remaining the same, the forms of embodiment and details of construction may be varied widely with respect to those described and illustrated purely by way of non-limiting example, without thereby departing from the scope of protection defined by the appended claims.

## Claims

1. An accessory gripping device for the passenger of a motorcycle (10), **characterized in that** it comprises a cover (22) which can be fitted on the motorcycle fuel tank (12) and which is provided with a pair of lateral handgrips (24) shaped for gripping by the passenger.

2. A device according to Claim 1, **characterized in that** the cover (22) can be secured to the tank (12) by adhesive means.

3. A device according to Claim 2, **characterized in that** the cover (22) can be secured to the tank (12) releasably.

4. A device according to Claim 3, **characterized in that** it includes means for the quick connection of the cover (22) to the tank (12) of the motorcycle (10), the means comprising a first adhesive base element (28) forming a first layer which can be fitted permanently on the tank (12) and a second adhesive element (30) forming a second layer which can be fitted permanently on the internal surface of the cover (22), the second element (30) having a shape which fits that of the first element (28) and adhering thereto simply by pressure.

5. A device according to Claim 4, **characterized in that** the quick connection means (28, 30) comprise a micro-hook fixing device.

6. A device according to any one of the preceding claims, **characterized in that** the handgrips (24) are shaped in a manner such as to have a rear surface (34) for supporting the palm of the hand.

7. A device according to any one of the preceding claims, **characterized in that** the handgrips (24) are shaped in their front portions so as to form an undulating surface (32) which can constitute a plurality of seats for the fingers.

8. A device according to any one of the preceding claims, **characterized in that** the cover (22) is made of rigid material pre-shaped in accordance with the profile of the fuel tank (12) of the motorcycle (10).

9. A device according to any one of Claims 1 to 7, **characterized in that** the cover (22) is made of flexible material in order to adapt to the profile of the fuel tank (12) of the motorcycle (10).

10. A device according to any one of the preceding claims, **characterized in that** the cover (22) is suitable for being secured at least to the rear portion of the tank (12) and the lateral handgrips (24) are arranged in a forward position on the cover (22).

11. A device according to any one of the preceding claims, **characterized in that** it comprises at least one safety fastening strap (36) connected to the cover (22) and suitable for being arranged around the steering column of the motorcycle (10).

12. A device according to any one of the preceding claims, **characterized in that** it comprises at least one second safety fastening strap connected to the cover (22) and suitable for being fixed to the frame of the motor cycle (10) .

13. A device according to Claim 5, **characterized in that** it comprises an additional covering element which has a shape that fits that of the first adhesive base element (28) and which adheres thereto simply by pressure, to be fitted on the said element in the absence of the cover (22) in order to protect the respective portion of the fixing device.

14. A device according to Claim 13, **characterized in that** the covering element has a smooth outer surface.

15. A device according to Claim 14, **characterized in that** the outer surface of the covering element reproduces the characteristic ornamental motifs of the fuel tank (12) on which the adhesive base element (28) is to be fitted.
